# EUROPEAN PATENT APPLICATION

(11) **EP 2 928 028 A2**
(43) Date of publication of application: **07.10.2015**
(21) Application number: 15161128.2
(22) Date of filing: 26.03.2015
(51) Int. Cl.: H01R 39/12

(54) **Slip ring**

(30) Priority: 04.04.2014 KR 20140040778; 11.06.2014 KR 20140070599
(71) Applicant: Samsung Electro-Mechanics Co., Ltd., Gyeonggi-do (KR)
(72) Inventor: Kim, Se Joo, Gyeonggi-Do (KR); Ha, Keun Soo, Gyeonggi-Do (KR); Yun, Tae Ho, Gyeonggi-Do (KR); Oh, Myung Geun, Gyeonggi-Do (KR)
(74) Representative: Grünecker Patent- und Rechtsanwälte PartG mbB

(57) **Abstract**

A slip ring assembly includes a first member, a second member facing one surface of the first member, rotating relatively with respect to the first member, and formed of a conductive material, and a bearing member fixed to the first member so as to be provided between the first and second members. The first and second members respectively, electrically contact the bearing member.

## Description

### CROSS-REFERENCE TO RELATED APPLICATION

This application claims the priority and benefit of Korean Patent Applications No. 10-2014-0040778 and 10-2014-0070599 filed on April 4, 2014 and June 11, 2014, respectively, with the Korean Intellectual Property Office, the disclosures of which are incorporated herein by reference.

### BACKGROUND

The present disclosure relates to a slip ring.

Generally, a slip ring is a device allowing an electrical circuit, a power supply, or the like, of a fixed part, and an electrical circuit, a power supply, or the like, of a rotating part, to be electrically connected to each other without twisting wirings during rotation of the rotating part.

A slip ring according to the related art includes a fixed body enclosing a rotating body, and has a structure in which the fixed body is provided with an elastic pressing member (for example, an elastic thread, or the like) configured to continuously contact the rotating body, such that even though the rotating body rotates, a terminal of the rotating body and the elastic pressing member may be continuously maintained in a state in which they are electrically connected to each other without twisting the wiring.

However, in the structure according to the related art as described above, abrasion of the elastic pressing member may occur due to continuous rotation of a rotating member, such that durability of the slip ring may be relatively low. In addition, the structure may be very complicated, such that a production cost of slip rings is significantly high.

### SUMMARY

An aspect of the present disclosure may provide a slip ring using a bearing, resistant to abrasion and ensuring a continuous contact in the case of movement of a rotating body to prevent a contact defect or the generation of noise in transferring a signal.

An aspect of the present disclosure may also provide a slip ring using a bearing, able to be cheaply produced and provided due to having a simple configuration.

According to an aspect of the present disclosure, a slip ring assembly may include a first member, a second member facing one surface of the first member, rotating relatively with respect to the first member, and formed of a conductive material, and a bearing member fixed to the first member to be provided between the first and second members, wherein the first and second members respectively, electrically contact the bearing member. The first and second members may rotate relatively with respect to each other through the bearing member.

A portion of a plurality of rotating rollers may be formed of a material containing copper, and the remaining thereof may be formed of a material (for example, stainless steel) having a higher degree of strength than strength of the material containing copper, such that the plurality of rotating rollers may be resistant to abrasion even in the case of use for a long period of time.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a perspective view of a slip ring according to an exemplary embodiment of the present disclosure;
FIG. 2 is an exploded perspective view of the slip ring of FIG. 1;
FIG. 3 is a cross-sectional view of the slip ring taken along line A-A' of FIG. 1;
FIG. 4 is a perspective view illustrating a slip ring according to another exemplary embodiment of the present disclosure;
FIG. 5 is an exploded perspective view of the slip ring of FIG. 4;
FIG. 6 is a cross-sectional view of the slip ring taken along line B-B' of FIG. 4;
FIGS. 7 and 8 are cross-sectional views illustrating a slip ring according to another exemplary embodiment of the present disclosure;
FIG. 9 is a perspective view illustrating an example in which the slip rings of FIGS. 1 through 6 are mounted on a rotational shaft; and
FIG. 10 is a perspective view illustrating an example in which the slip rings of FIGS. 7 and 8 are mounted on a rotational shaft.

### DETAILED DESCRIPTION

Exemplary embodiments of the present disclosure will now be described in detail with reference to the accompanying drawings.

The disclosure may, however, be embodied in many different forms and should not be construed as being limited to the embodiments set forth herein. Rather, these embodiments are provided so that this disclosure will be thorough and complete, and will fully convey the scope of the disclosure to those skilled in the art.

In the drawings, the shapes and dimensions of elements may be exaggerated for clarity, and the same reference numerals will be used throughout to designate the same or like elements.

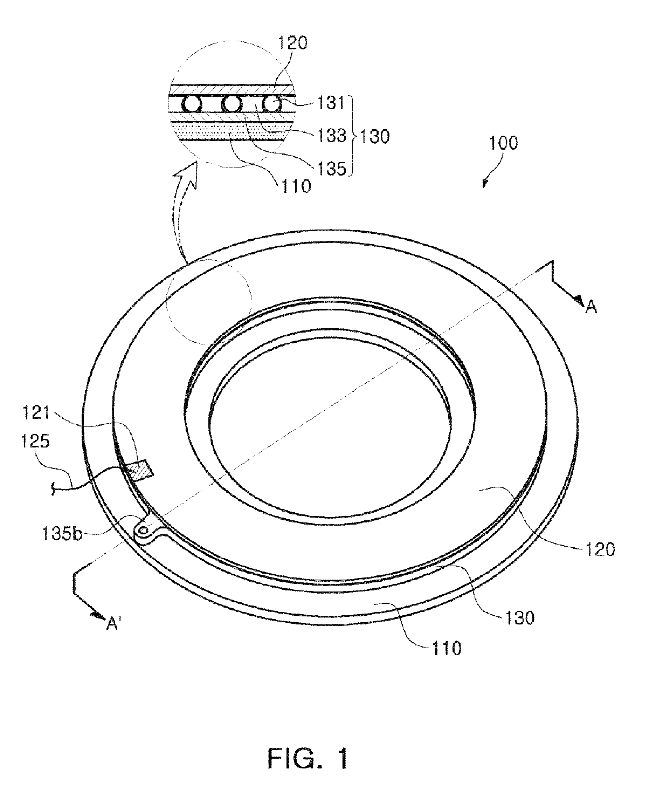

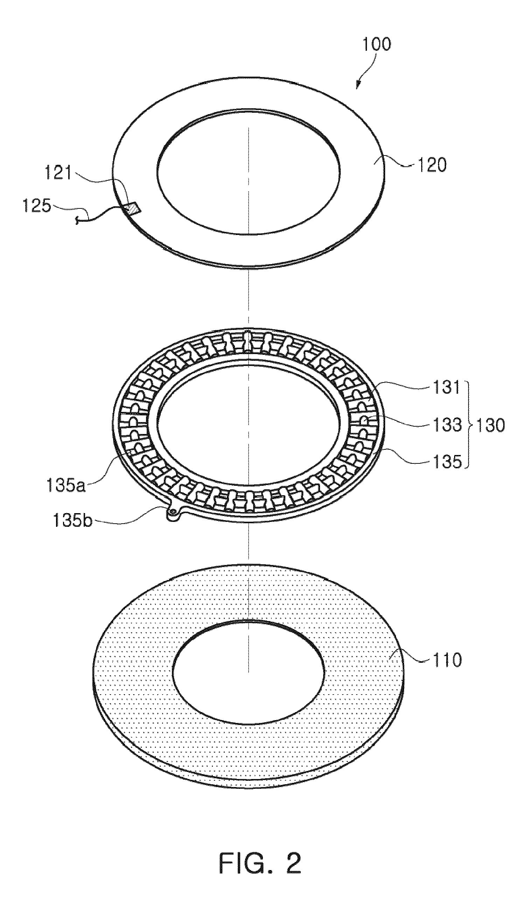

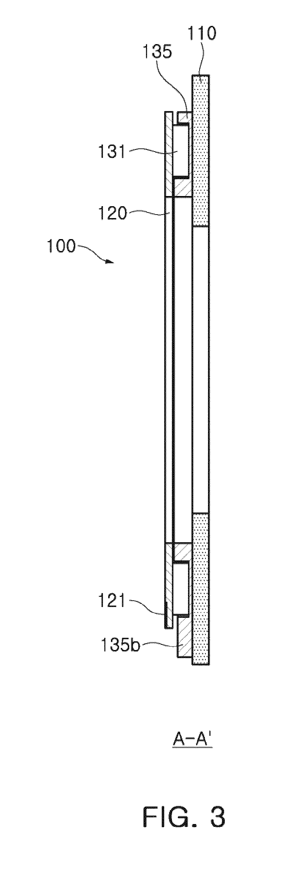

FIG. 1 is a perspective view of a slip ring according to an exemplary embodiment of the present disclosure; FIG. 2 is an exploded perspective view of the slip ring of FIG. 1; and FIG. 3 is a cross-sectional view of the slip ring taken along line A-A' of FIG. 1.

Referring to FIG. 1, a slip ring assembly 100 according to the exemplary embodiment of the present disclosure may include a first member 110, a second member 120 facing one surface of the first member 110, rotating relatively with respect to the first member 110, and formed of a conductive material, and a bearing member 130 fixed to the first member 110 so as to be provided between the first and second members 110 and 120, wherein the first and second members 110 and 120 respectively, electrically contact the bearing member 130. That is, the first and second members 110 and 120 and the bearing member 130 may be electrically connected to each other to supply power or transfer a control signal.

In the present disclosure, the first and second members 110 and 120 may rotate relatively with respect to each other through the bearing member 130 interposed therebetween. Therefore, in a case in which the first member 110 is a fixed member, the second member 120 may be a rotating member, and in a case in which the first member 110 is a rotating member, the second member 120 may be a fixed member. That is, the first and second members may be appropriately applied depending on a case or a condition.

Hereinafter, a case in which the first member 110 is a rotating member, that is, a rotating wheel 110 and the second member 120 is a fixed member, that is, a fixed wheel 120 will be described in detail by way of example.

Here, the fixed wheel 120 may be a part fixed in utilizing the slip ring assembly 100 and the rotating wheel 110 may be a part rotating in utilizing the slip ring assembly 100. For example, the rotating wheel 110 may rotate together with a pedal of a bicycle in a state in which it is fixed to a rotational shaft of the pedal of the bicycle, and the fixed wheel 120 may be fixed to a non-rotating part of the bicycle.

As described above, the slip ring assembly 100 according to the exemplary embodiment of the present disclosure may include the rotating wheel 110 and the fixed wheel 120.

The rotating wheel 110 may be a member fixed to a rotating member, for example, a rotational shaft, or the like, to rotate together with the rotating member, and the fixed wheel 120 may be a member fixed to a part other than the rotational shaft in a state in which it maintains an electrical contact with the rotating wheel 110.

Therefore, one of the rotating wheel 110 and the fixed wheel 120 may be provided with the bearing member 130. In other words, the bearing member 130 may be fixed to one of the rotating wheel 110 and the fixed wheel 120 so as to smoothly rotate while maintaining a state of contact between the rotating wheel 110 and the fixed wheel 120 performing relative rotation. Although a structure in which the bearing member 130 is fixed to the rotating wheel 110 has been illustrated in FIGS. 1 through 3, the present disclosure is not limited thereto. That is, the bearing member 130 may also be fixed to the fixed wheel 120.

Meanwhile, the slip ring assembly 100 according to the exemplary embodiment of the present disclosure may be a device allowing an electrical circuit, a power supply, and the like, of the fixed member and an electrical circuit, a power supply, and the like, of the rotating member to be electrically connected to each other without twisting a wiring during rotation of the rotating member. For example, the slip ring assembly 100 may be mounted on the rotational shaft (the rotating member) of the pedal of the bicycle to measure a rotational torque of the pedal and be used to transfer the measured rotational torque to a controller provided in another part (the fixed member) of the bicycle.

Hereinafter, a case in which the bearing member 130 is fixed to the rotating wheel 110 will be described by way of example. However, as described above, the bearing member 130 may also be fixed to the fixed wheel 120 in the same structure.

Referring to FIGS. 2 and 3, in the slip ring assembly 100 according to the exemplary embodiment of the present disclosure, the bearing member 130 may be provided on the rotating wheel 110. In addition, the bearing member 130 may rotate in a state in which it maintains a contact with the fixed wheel 120.

The slip ring assembly 100 may have a ring shape in which a central part thereof is hollow. The rotational shaft may be fitted into the hollow of the slip ring assembly. However, the present disclosure is not limited thereto. That is, an outer side surface of the slip ring assembly may have various shapes such as a circular shape, or an oval shape, a polygonal shape, and the like, as long as the slip ring assembly has the ring shape in which the central part thereof is hollow.

In addition, the rotating wheel 110 configuring the slip ring assembly 100 may also have a ring shape in which it has a hollow formed therein, and may be fixed in a state in which it is fitted onto the rotational shaft to thereby rotate together with the rotational shaft. In addition, the rotating wheel 110 may be formed of a printed circuit board (PCB) to be easily utilized.

The rotating wheel 110 may be provided with the bearing member 130 disposed in a circumferential direction. The rotating wheel 110 needs to continuously maintain an electrical connection with the fixed wheel 120 rotating relatively with respect thereto. Therefore, the bearing member 130 interposed between the rotating wheel 110 and the fixed wheel 120 may continuously maintain the electrical connection between the fixed wheel 120 and the rotating wheel 110 while smoothing the rotation.

The bearing member 130 may have a structure in which a plurality of rotating rollers 131 having rotational axes provided in a radial direction and having a cylindrical shape are disposed to be spaced apart from each other by a predetermined interval in the circumferential direction.

Although a case in which the rotating rollers 131 are fixed by constraining members 133 rotatably constraining the rotating rollers 131 at both sides of the rotating rollers 131 in the circumferential direction so that the rotational shafts thereof are provided in the radial direction has been illustrated in FIG. 2, the present disclosure is not limited thereto. For example, the rotating rollers 131 may also be provided to be rotatable by the rotational shaft provided in the radial direction along the rotational shafts of the rotating rollers 131.

Meanwhile, the bearing member 130 may include a frame 135 fixed to the rotating member 110. The frame 135 may include a rail groove 135a formed in the circumferential direction so that the rotating rollers 131 are mounted therein, wherein the rail groove 135a may have a '⊏' shaped cross section. In addition, in the case in which the bearing member 130 includes the frame 135, the bearing member 130 including the frame 135 may also configure the rotating wheel by itself.

In addition, the fixed wheel 120 may be provided in a state in which it maintains a contact with the bearing member 130. That is, the fixed wheel 120 may have a ring shape in which a central part thereof is hollow. The rotational shaft may be fitted into the hollow formed in the central part of the fixed wheel 120. However, the fixed wheel 120 is not fixed to the rotational shaft, but is fixed to an external fixing member. That is, the fixed wheel 120 may be maintained in a state in which it is fixed without rotating with the rotational shaft even though the rotational shaft rotates. However, the present disclosure is not limited thereto. That is, an outer side surface of the fixed wheel may have various shapes such as a circular shape, or an oval shape, a polygonal shape, and the like, as long as the fixed wheel has the ring shape in which the central part thereof is hollow.

Here, the fixed wheel 120 and the bearing member 130 need to be maintained in a state in which they are electrically connected to each other. Therefore, the fixed wheel 120 and the rotating rollers 131 of the bearing member 130 may be at least partially formed of a conductive material. Only in this case, the fixed wheel 120 and the bearing member 130 may continuously maintain a contact therebetween to prevent the supply of power from being stopped or a transfer of a signal from being stopped.

Here, the rotating rollers 131 of the bearing member 130 may be formed of a material containing copper that may lower a contact resistance (for example, copper, brass, or the like). However, since the rotating rollers 131 formed of the copper may be vulnerable to abrasion, some of the plurality of rotating rollers 131 provided in the circumferential direction may be formed of the copper, and the others thereof may be formed of a material having good strength in spite of having a comparatively high contact resistance, such as a stainless material, or the like.

In addition, the rotating rollers 131 themselves may be electrically connected to each other while frictionally contacting the fixed wheel 120.

In addition, the rotating rollers 131 may be electrically connected to the electrical circuit, the power supply, or the like, of the rotating member. In the case in which the rotating wheel 110 is the printed circuit board, a terminal part (not illustrated) of the board and the frame 135 in which the rotating rollers 131 are provided may be electrically connected to each other, and the terminal part of the printed circuit board may be electrically connected to the electrical circuit, the power supply, or the like, of the rotating member. In this case, the rotating rollers 131 need to frictionally contact the frame 135 to continuously maintain an electrical connection with the frame.

Alternatively, in a case in which the rotating wheel 110 is formed of a conductive material, the rotating rollers 131 may frictionally contact the rotating wheel 110, and the rotating wheel 110 may be electrically connected to an electrical circuit, a power supply, or the like, of an internal component.

Meanwhile, in a case in which the bearing member 130 including the frame 135 configures the rotating wheel by itself, the bearing member 130 may frictionally contact the frame 135, and a terminal part 135b of the frame 135 may be electrically connected to the electrical circuit, the power supply, or the like, of the internal component.

In addition, the fixed wheel 120 may include a terminal part 121, which may be connected to a lead wire 125 connected to the outside. In addition, the lead wire 125 may be connected to an external power supply, a controller, or the like, to supply power or transfer a control signal.

The power or the control signal may be transferred to the internal component, or the like, through the fixed wheel 120, the bearing member 130, and the rotating wheel 110. To the contrary, a signal of the internal component, or the like, may be transferred to the controller.

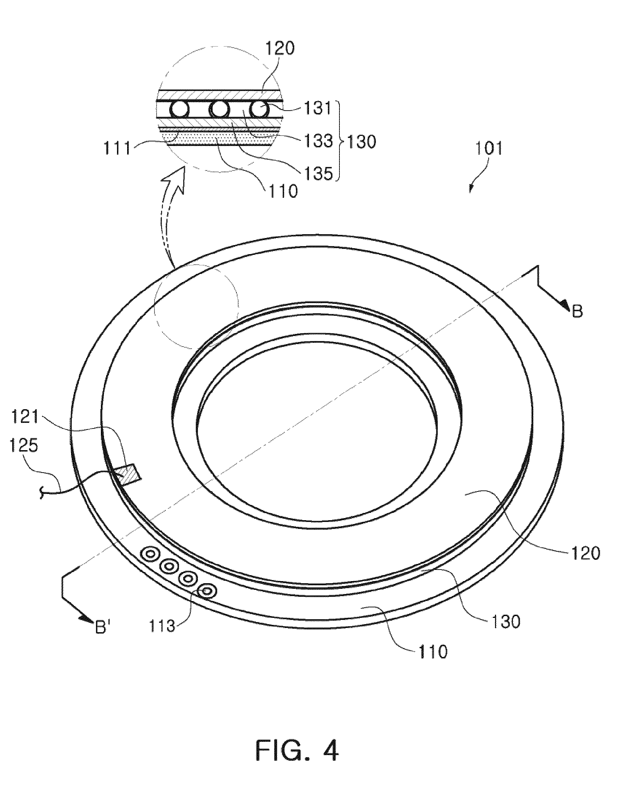

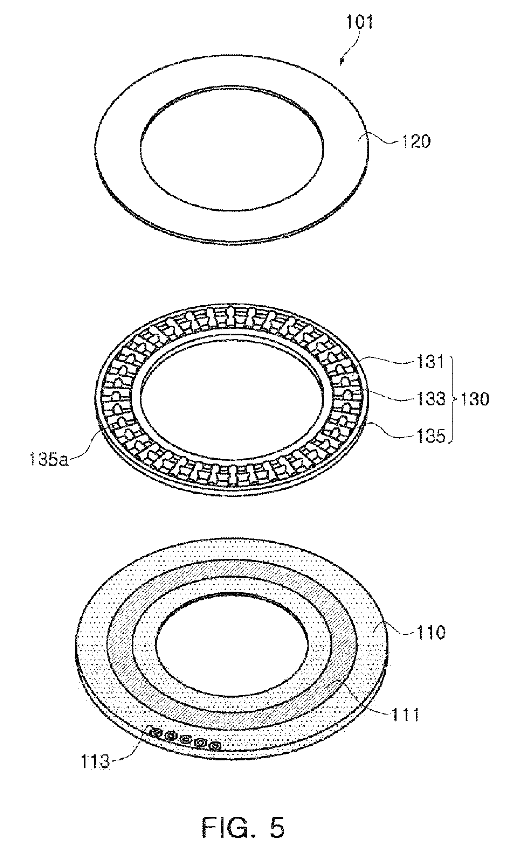

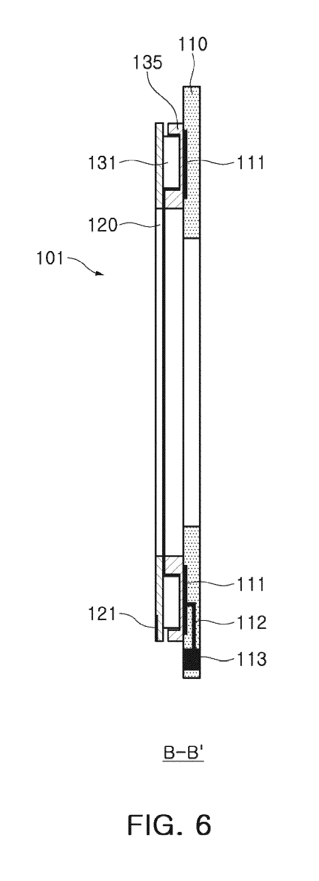

FIG. 4 is a perspective view illustrating a slip ring according to another exemplary embodiment of the present disclosure; FIG. 5 is an exploded perspective view of the slip ring of FIG. 4; and FIG. 6 is a cross-sectional view of the slip ring taken along line B-B' of FIG. 4.

Referring to FIGS. 4 through 6, a slip ring assembly 101 according to another exemplary embodiment of the present disclosure is different from the slip ring assembly 100 according to the exemplary embodiment of the present disclosure illustrated in FIGS. 1 through 3 in that the rotating wheel 110 formed of the printed circuit board is provided with an inner side terminal 111 and outer side terminals 113. Hereinafter, a difference between the slip ring assembly 101 according to the present exemplary embodiment and the slip ring assembly 100 according to the exemplary embodiment illustrated in FIGS. 1 through 3 will be mainly decreased, and a description for the same components therebetween will be replaced by the above-mentioned description.

In the slip ring assembly 101 according to another exemplary embodiment, the rotating wheel 110 may include the inner side terminal 111 and the outer side terminals 113.

The inner side terminal 111 may be provided in a shape corresponding to that of the frame 135 of the bearing member 130 on one surface of the rotating wheel 110. That is, a terminal formed of a conductive material may be provided in the shape corresponding to that of the frame 135 of the bearing member 130 on one surface of the rotating wheel 110, and the frame 135 may be fixed to contact a part in which the inner side terminal 111 is provided. Here, since the frame 135 is formed of a conductive material, it is connected to the inner side terminal 111, whereby the bearing member 130 and the inner side terminal 111 may be electrically connected to each other.

In addition, the rotating wheel 110 may include the outer side terminals 113 electrically connected to the inner side terminal 111. Here, the outer side terminals 113 may be provided at an inner side or an outer side of the frame 135 in the radial direction. Although a case in which the outer side terminals 113 are provided at the outer side of the frame 135 in the radial direction has been illustrated in FIGS. 4 through 6, the present disclosure is not limited thereto. The outer side terminals 113 may be provided at the inner side of the frame 135 in the radial direction.

The outer side terminals 113 may be electrically connected to the inner side terminal 111 through vias 112 provided in the rotating wheel 110.

Alternatively, the outer side terminals 113 may be provided in pattern shapes protruding from any one side of the inner side terminal 111 in the radial direction. That is, the outer side terminals 113 may be formed by extending the inner side terminal 111. In this case, the vias need not to be separately formed, and the outer side terminals 113 may be formed while forming the inner side terminal 111, such that it may be very easy to manufacture the slip ring assembly.

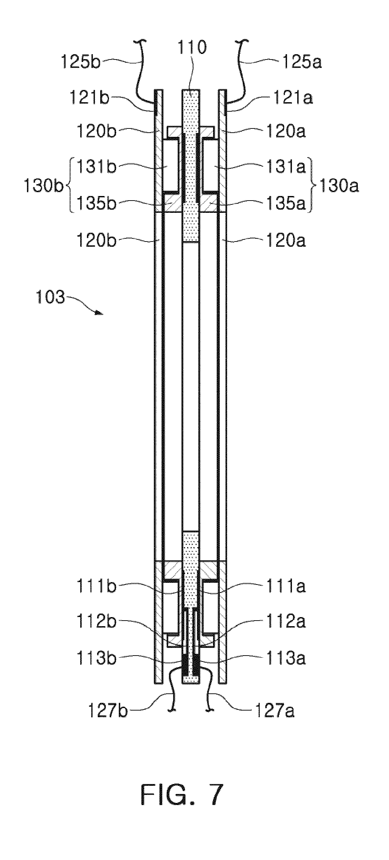

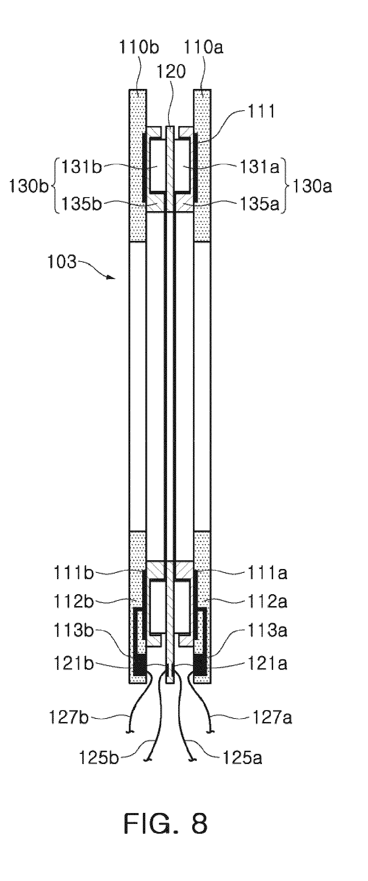

FIGS. 7 and 8 are cross-sectional views illustrating a slip ring according to another exemplary embodiment of the present disclosure.

Referring to FIGS. 7 and 8, a slip ring assembly 103 according to another exemplary embodiment of the present disclosure may have a structure in which a pair of rotating wheels (rotating members) are coupled to one fixed wheel (fixed member) or a pair of fixed wheels (fixed wheels) are coupled to one rotating wheel (rotating member).

First, as illustrated in FIG. 7, a slip ring assembly 103 in which a pair of fixed members 120a and 120b are coupled to one rotating member 110 may include the rotating member 110, the pair of fixed members 120a and 120b facing both side surfaces of the rotating member 110, respectively, and formed of a conductive material, and a pair of bearing members 130a and 130b fixed to the rotating member 110 or the fixed members 120a and 120b to be provided between the rotating member 110 and the pair of fixed members 120a and 120b, respectively, wherein the rotating member 110 and the fixed members 120a and 120b may electrically contact the bearing members, respectively.

Next, as illustrated in FIG. 8, a slip ring assembly 103 in which a pair of rotating members 110a and 110b are coupled to one fixed member 120 may include the fixed member 120, the pair of rotating members 110a and 110b facing both side surfaces of the fixed member 120, respectively, rotating relatively with respect to the fixed member 120, and formed of a conductive material, and a pair of bearing members 130a and 130b fixed to the fixed member 120 or the rotating members 110a and 110b to be provided between the fixed member 120 and the pair of rotating members 110a and 110b, respectively, wherein the fixed member 120 and the rotating members 110a and 110b may electrically contact the bearing members, respectively.

The slip ring assembly 103 illustrated in FIGS. 7 and 8 may have a structure in which the pair of rotating wheels (rotating members) are coupled to both surfaces of one fixed wheel (fixed member), respectively, or the pair of fixed wheels (fixed members) are coupled to both surfaces of one rotating wheel (rotating member), respectively, as compared with the slip ring assemblies described above with reference to FIGS. 1 through 6. Therefore, in the case in which a plurality of connection lines are required to supply the power, transfer the control signal, or the like, a composite coupling structure in which the pair of rotating wheels (or fixed wheels) are coupled to one fixed wheel (or rotating wheel) as shown in FIGS. 7 and 8 may be used to decrease an entire thickness of the slip ring assembly 103.

In addition, since the slip ring assembly 103 shown in FIGS. 7 and 8 is the same as the slip ring assemblies described above with reference to FIGS. 1 through 6 in that it has a structure in which the fixed wheel and the rotating wheel are coupled to each other through the bearing member except for the composite coupling structure in which the pair of rotating wheels (or fixed wheels) are coupled to one fixed wheel (or rotating wheel), a detail description therefor will be replaced by the description provided with reference to FIGS. 1 through 6.

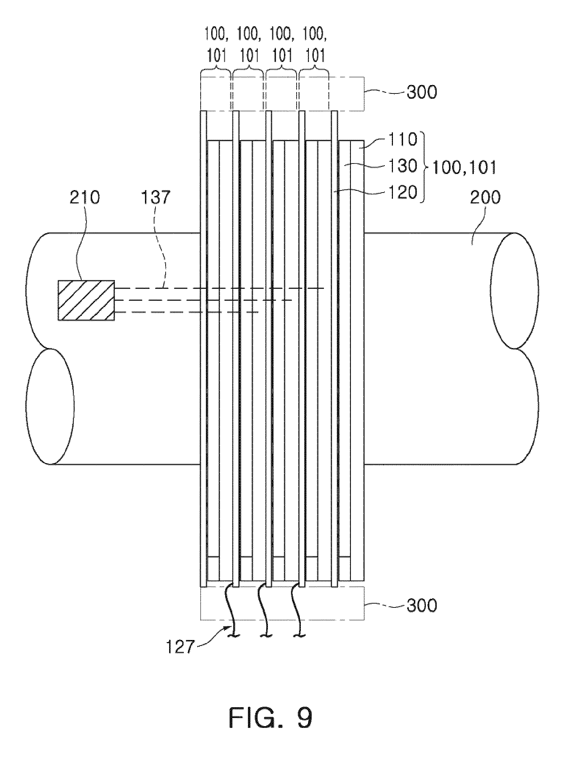

FIG. 9 is a perspective view illustrating an example in which the slip rings of FIGS. 1 through 6 are mounted on a rotational shaft.

Referring to FIG. 9, the slip ring assemblies 100 and 101 according to the exemplary embodiments of the present disclosure may be mounted on a rotational shaft 200 that rotates.

In addition, a sensor, a component, or the like, requiring an external control signal, external power, or the like, such as an electric circuit, a power supply, or the like, may be mounted in a rotating member including the rotational shaft 200. Therefore, the slip ring assemblies 100 and 101 according to the present exemplary embodiment may be mounted in order to receive the external control signal, the external power.

The rotating wheel 110 including the bearing member 130 among components of the slip ring assembly 100 may be fixed to the rotational shaft 200, and the fixed wheel 120 may rotate relatively with respect to the rotational shaft 200 in a state in which it frictionally contacts the bearing member 130. Therefore, the fixed wheel 120 may be fixed to an entire frame 300 fixed to a member that does not rotate.

For example, it may be demanded that a sensor 210 for measuring a torque applied to a rotating pedal of an electrical bicycle is mounted on a rotational shaft (corresponding to the rotational shaft 200 of FIG. 9) of the rotating pedal and power lines, control lines, and signal lines required for an operation of the sensor are connected to a sensor mounted in the rotating member (the rotating wheel 110) and are led to the fixed member (the fixed wheel 120).

To this end, the slip ring assemblies 100 and 101 may be provided to be overlapped with triply or more or be provided to be spaced apart from each other by a predetermined interval (in the slip ring assemblies 100 and 101 according to the present exemplary embodiment, one unit may be in charge of the supply of one power, control signal, or the like), and may be mounted on the rotational shaft 200. The power lines, the control lines, and the signal lines may be connected to the slip ring assemblies 100 and 101, respectively.

In this case, the rotating rollers 131 of the respective slip ring assemblies 100 and 101 need to be electrically connected to the sensor 210 through internal lead wires 137 (be electrically connected to the sensor through the rotating wheels 110 or the frames 135 or be electrically connected directly to the sensor), and external lead wires 127 may be connected to the fixed wheels 120 of the slip ring assembles 100 and 101 to allow the power to be supplied from the outside or allow the control signal to be transferred to the inside or the outside.

Meanwhile, in this case, since a plurality of slip ring assemblies 100 and 101 are necessarily provided to be overlapped with each other, in a case in which the numbers of power lines, control signals, and the like, are increased, an entire volume may become large.

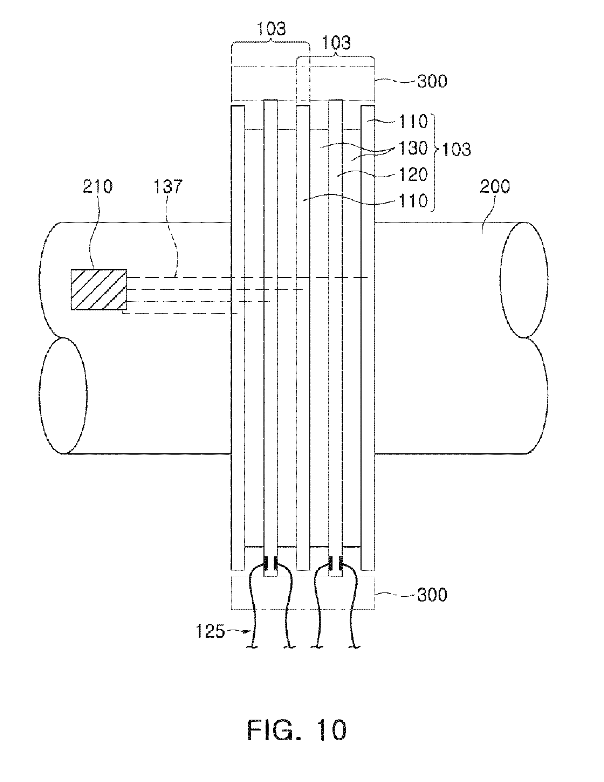

FIG. 10 is a perspective view illustrating an example in which the slip rings of FIGS. 7 and 8 are mounted on a rotational shaft.

Referring to FIG. 10, the slip ring assemblies 103 according to the exemplary embodiment of the present disclosure may be mounted on a rotational shaft 200 that rotates. The slip ring assemblies 103 according to the present exemplary embodiment may be to complement a disadvantage that the entire volume may become large in the case in which the numbers of power lines, control signals, and the like, are increased.

That is, the slip ring assembly 103 described with reference to FIGS. 7 and 8 may have the composite coupling structure in which the pair of rotating wheels (or fixed wheels) are coupled to one fixed wheel (or rotating wheel). That is, the slip ring assembly 103 may have a structure in which one fixed wheel (or rotating wheel) forms a module sharing the pair of rotating wheels (or fixed wheel) with each other, such that one module may include two control signal lines (power signal lines).

Since a structure in which the slip ring assemblies 103 are coupled to the rotational shaft 200 except for this structural feature is the same as the structure described above with reference to FIG. 9, a detailed description therefor will be replaced by the above-mentioned description.

As set forth above, according to the exemplary embodiments of the present disclosure, the slip ring able to be resistant to abrasion and ensuring a continuous contact point to prevent a contact defect or generation of noise in transferring a signal may be provided.

In addition, according to the exemplary embodiments of the present disclosure, the slip ring able to be cheaply produced and provided due to having a simple configuration may be provided.

While exemplary embodiments have been shown and described above, it will be apparent to those skilled in the art that modifications and variations could be made without departing from the scope of the present invention as defined by the appended claims.

## Claims

1. A slip ring assembly comprising:
a first member;
a second member facing one surface of the first member, rotating relatively with respect to the first member, and formed of a conductive material; and
a bearing member fixed to the first member to be provided between the first member and the second member,
wherein the first and second members electrically contact the bearing member, respectively.

2. The slip ring assembly of claim 1, wherein the bearing member includes a plurality of rotating rollers having rotational axes provided in a radial direction, the plurality of rotating rollers being conductive, having a cylindrical shape, and being repeatedly disposed to be spaced apart from each other in a circumferential direction, and
the rotating rollers are electrically connected to the first and second members, respectively.

3. The slip ring assembly of claim 2, wherein the plurality of rotating rollers maintain a state of electrical contact with the first member.

4. The slip ring assembly of claim 3, wherein an outer side surface of at least one of the plurality of rotating rollers maintains a state of contact with the second member.

5. The slip ring assembly of claim 2, wherein the first member is a printed circuit board including outer side terminals, and
the plurality of rotating rollers contact an inner side terminal electrically connected to the outer side terminals of the printed circuit board.

6. The slip ring assembly of claim 2, wherein the first member includes a frame receiving the rotating rollers therein.

7. The slip ring assembly of claim 6, wherein the frame is conductive.

8. The slip ring assembly of claim 7, wherein the first member is a printed circuit board including outer side terminals, and
the frame contacts an inner side terminal electrically connected to the outer side terminals of the printed circuit board.

9. The slip ring assembly of claim 2, wherein the first member is a frame receiving the rotating rollers therein.

10. The slip ring assembly of claim 2, wherein a portion of the plurality of rotating rollers are formed of a material containing copper, and the remaining thereof is formed of a material having a higher degree of strength than strength of the material containing copper.

11. The slip ring assembly of claim 10, wherein the material having the higher degree of strength than strength of the material containing copper is stainless steel.

12. A slip ring assembly comprising:
a rotating member;
a pair of fixed members facing both side surfaces of the rotating member, respectively, and formed of a conductive material; and
a pair of bearing members fixed to the rotating member or the fixed members to be provided between the rotating member and the pair of fixed members, respectively,
wherein the rotating member and the fixed members electrically contact the bearing members, respectively.

13. A slip ring assembly comprising:
a fixed member;
a pair of rotating members facing both side surfaces of the fixed member, respectively, rotating relatively with respect to the fixed member, and formed of a conductive material; and
a pair of bearing members fixed to the fixed member or the rotating members to be provided between the fixed member and the pair of rotating members, respectively,
wherein the fixed member and the rotating members electrically contact the bearing members, respectively.
